# FASCICULE DE BREVET EUROPEEN

(11) **EP 2 643 169 B1**
(45) Date de publication et mention de la délivrance du brevet: **12.11.2014**
(21) Numéro de dépôt: 11799776.7
(22) Date de dépôt: 24.11.2011
(51) Int. Cl.: B60B 27/00, B62D 7/18

(54) **ELEMENT DE LIAISON AU SOL D'UN VEHICULE FORMANT UN CORPS CREUX ET PROCEDE DE FABRICATION D'UN TEL ELEMENT DE LIAISON AU SOL**
HOHLKÖRPERFORMENDES BODENKONTAKTIERUNGSLEMENT EINES FAHRZEUGES UND VERFAHREN ZUR HERSTELLUNG EINES SOLCHEN BODENKONTAKTIERUNGSELEMENTS
VEHICLE GROUND-CONTACTING ELEMENT FORMING A HOLLOW BODY AND METHOD FOR MANUFACTURING SUCH A GROUND-CONTACTING ELEMENT

(30) Priorité: 26.11.2010 FR 1059806
(43) Date de publication de la demande: 02.10.2013
(73) Titulaire: Peugeot Citroën Automobiles SA, 78140 Vélizy Villacoublay (FR)
(72) Inventeur: BERTHIAS, Gilles, F-91270 Vigneux Sur Seine (FR)
(74) Mandataire: Rosenberg, Muriel Sylvie
(86) Numéro de dépôt international: PCT/FR2011/052749
(87) Numéro de publication internationale: WO 2012/069765

(56) Documents cités:
- EP-A1- 1 055 586
- JP-A- 10 129 225
- JP-A- 56 082 668

## Description

La présente invention se rapporte à un élément de liaison au sol d'un véhicule, notamment d'un véhicule automobile.

Elle concerne principalement un élément de liaison au sol d'un véhicule comportant deux parties en formant des coques, assemblées entre elles aux moyens d'au moins une première et une seconde zones de liaison de manière à former un corps creux rigide. Les zones de liaison ainsi formées sont adaptées de manière à pouvoir compenser des variations de dimensionnement de la première et/ou de la seconde coque tout en garantissant la rigidité du corps ainsi formé.

Il est connu du document EP 1 593 584 un pivot de roue, formant un élément de liaison au sol d'un véhicule, constitué de deux coques assemblées entre elles de manière à former un corps creux rigide. L'assemblage de ces deux coques se fait par des zones de liaison positionnées en périphérie de chacune de ces deux coques. Ces zones de liaison sont constituées par un bord tombant d'une première des deux coques serti autour d'un bord de la seconde coque. Mais cet assemblage impose de faibles jeux au niveau de la surface de liaison entre ces deux coques, pour ne pas déformer la première ou la seconde coque lors du sertissage.

Il est aussi connu un pivot de roue dont le bord de la première coque est positionné directement au contact du bord de la seconde coque, un cordon de soudure parcourant la ligne de contact de ces deux coques. Pour que le cordon de soudure maintienne rigidement ces deux coques ensemble, il faut que le jeu le long de la ligne de contact entre ces deux coques soit faible, imposant de fortes contraintes dimensionnelles lors de l'emboutissage de chacune de ces deux coques.

Il est aussi connue du document JP 56-082668, qui divulgue le préambule de la revendication 1.

Ainsi les deux modes de réalisation connus imposent toujours une grande précision de fabrication de chacune des deux coques, augmentant le coût et le temps de fabrication d'un tel corps creux rigide.

L'objet de l'invention concerne un élément de liaison au sol comportant deux parties formant des coques, assemblées entre elles aux moyens d'au moins une première et une seconde zones de liaison de manière à former un corps creux rigide, dont les zones de liaison sont adaptées pour compenser des variations de dimensionnement de la première et/ou de la seconde coque permettant de limiter le prix et le temps de fabrication d'un tel corps creux rigide.

A cet effet, l'invention a pour objet un procédé d'assemblage d'un élément de liaison au sol conforme à la revendication 1.

D'autres caractéristiques sont énoncées dans les revendications dépendantes.

D'autres avantages et caractéristiques techniques de la présente invention apparaîtront plus clairement à la lumière de la description qui suit en référence aux figures des dessins annexés parmi lesquelles :
- La figure 1 représente une vue en perspective d'un pivot de roue, constitué d'une première et d'une seconde coque, formant un élément de liaison au sol selon l'invention; et
- Les figures 2 à 4 présentent les différentes étapes permettant l'assemblage de la première coque avec la seconde coque, formant le pivot de roue selon l'invention.

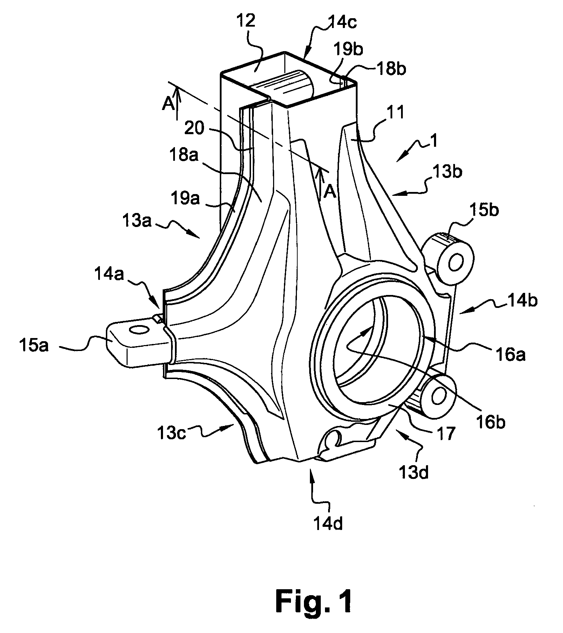

La figure 1 représente une vue en perspective d'un pivot de roue 1 selon l'invention. Un tel pivot de roue 1 constitue un élément de liaison au sol d'un véhicule automobile. Le pivot de roue 1 comporte une première partie 11 et une seconde partie 12 en forme de coques, assemblées entre elles en quatre zones de liaison 13, formant un corps creux. La première coque 11 constitue la partie avant du pivot de roue 1 contre laquelle vient se positionner la roue et la seconde coque 12 constitue la partie arrière. Entre ces zones de liaison 13, les deux coques 11 et 12 présentent des parties non jointives, formant des ouvertures 14 dans lesquels sont positionnés différents éléments de jonction ou de renfort 15 permettant la fixation des bras de suspension supérieur et inférieur, de la biellette de commande de direction et d'un étrier de frein (les bras de suspension, la biellette de commande de direction et l'étrier de frein n'étant pas représentés). Ainsi dans le mode de réalisation tel que présenté :
- sur un premier coté du pivot de roue 1, dit coté avant, est formée une première ouverture 14a recevant un premier support 15a permettant de solidariser au pivot de roue 1 la biellette de commande de direction ;
- sur le coté opposé du pivot de roue 1, dit doté arrière, est formée une seconde ouverture 14b recevant un second support 15b formant deux points de fixation pour le montage de l'étrier de frein ; et
- en partie haute et basse du pivot de roue 1 sont respectivement formées une troisième ouverture 14c et une quatrième ouverture 14d, permettant de relier au pivot de roue 1 le bras supérieur et le bras inférieur de suspension.

Les zones de liaison 13 sont réparties en périphérie du pivot de roue 1, délimitées de chaque coté par les ouvertures 14. La répartition des zones de liaison 13 le long de la surface périphérique du pivot de roue 1 se faisant de la sorte :
- entre les première 14a et troisième 14c ouvertures du pivot de roue 1 est positionnée la première zone de liaison 13a ;
- entre les deuxième 14b et troisième 14c ouvertures est positionnée la deuxième zone de liaison 13b ;
- entre les première 14a et quatrième 14d ouvertures est positionnée la troisième zone de liaison 13c ; et
- entre les deuxième 14b et quatrième 14d ouvertures est positionnée la quatrième zone de liaison 13d.

En partie centrale de chacune des deux coques avant 11 et arrière 12 sont formées des ouvertures circulaires 16a et 16b permettant le montage d'un support 17 d'un roulement à billes d'un moyeu de roue. Chaque zone de liaison 13 entre la coque avant 11 et la coque arrière 12 est réalisée par une surface de liaison 18 de la coque avant 11 venant en contact plan contre une surface de liaison 19 de la coque arrière 12. Des cordons de soudure 20 solidarisent la coque avant 11 avec la coque arrière 12 le long de ces surfaces de liaison 18 et 19.

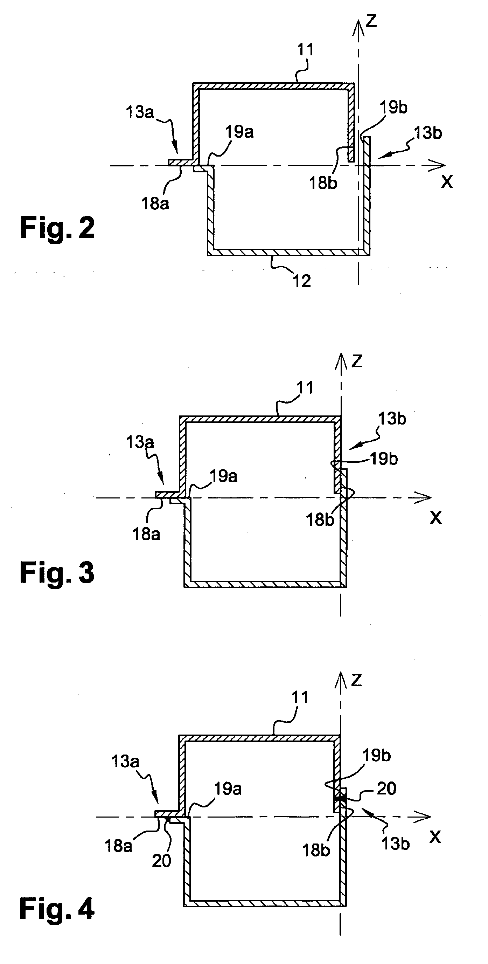

Sur les figures 2 à 4 sont représentées des vues en coupe au niveau d'une ligne A-A, telle que représentée sur la figure 1, du pivot de roue 1 suivant les différentes étapes permettant l'assemblage de la coque avant 11 avec la coque arrière 12. Cette ligne de coupe A-A est positionnée en position haute du pivot de roue 1, sachant que la troisième zones de liaison 13c et la quatrième zone de liaison 13d, qui sont positionnées en partie basse du pivot de roue 1 sont, respectivement, semblable à la première zone de liaison 13a et à la seconde zone de liaison 13b positionnées en partie haute du pivot de roue 1.

La figure 2 représente la première étape de l'assemblage de la coque avant 11 avec la coque arrière 12. Cette première étape constitue un positionnement de la coque avant 11 par rapport à la coque arrière 12 de telle sorte que :
- au niveau de la première zone de liaison 13a, la surface de liaison 18a de la coque avant 11 est positionnée en appui plan contre la surface de liaison19a de la coque arrière 12 ; et
- au niveau de la deuxième zone de liaison 13b, la surface de liaison 18b de la coque avant 11 est positionnée en regard de la surface de liaison 19b de la coque arrière 12.

Ainsi, dans le plan de coupe A-A, les surfaces de liaison 18 de la coque avant 11 et les surfaces de liaison 19 de la coque arrière 12 s'étendent suivant les directions :
- au niveau de la première zone de liaison 13a, la surface de liaison 18a de la coque avant 11 et la surface de liaison 19a de la coque arrière 12 s'étendent suivant une première direction X ; et
- au niveau de la deuxième zone de liaison 13b, la surface de liaison 18b de la coque avant 11 et la surface de liaison 19b de la coque arrière 12 s'étendent suivant une seconde direction Z, avec la première direction X et la seconde direction Z orientées de manière sensiblement perpendiculaire.

La figure 3 représente la deuxième étape de l'assemblage le la coque avant 11 avec la coque arrière 12. Cette deuxième étape consiste à faire translater la coque avant 11 suivant la direction X, guidée en translation par les surfaces de liaison 18a et 19a de la première zone de liaison 13a, positionnant les surfaces de liaison 18b et 19b de la deuxième zone de liaison 13b en contact plan.

Une étape intermédiaire non représentée peut être réalisée. Cette étape intermédiaire consiste à vérifier l'écartement de la coque avant 11 et de la coque arrière 12, délimitant le volume intérieur creux du pivot de roue 1. L'écartement est ajusté au niveau de la seconde zone de liaison 13b par translation de la surface de liaison 18b de la première coque 11 le long de la surface de liaison 19b de la seconde coque 12 suivant la seconde direction Z. Un tel réglage de l'écartement de la première coque 11 par rapport à la seconde coque 12 se fait indépendamment de la première zone de liaison 13a, permettant de compenser des variations de dimensionnement de la première coque 11 et/ou de la seconde coque 12.

La figure 4 représente la troisième étape de l'assemblage de la coque avant 11 avec la coque arrière 12. Cette troisième étape consiste à solidariser la coque avant 11 avec la coque arrière 12 au moyen de cordons de soudure 20 appliqués au niveau des différentes zones de liaison 13, en suivant les surfaces de liaison 18 et 19.

Dans le mode de réalisation tel que présenté, au niveau de la première zone de liaison 13a, le cordon de soudure 20 est de type en angle. Au niveau de la deuxième zone de liaison 13b, le cordon de soudure 20 est de type par transparence, tous deux étant réalisés par soudure au laser.

Une fois ces deux coques assemblées, les différents éléments de jonction ou de renfort 15, ainsi que le support 17 du roulement à billes du moyeu de roue peuvent être positionnés et solidarisés dans les différentes ouvertures 14 et 16, la solidarisation se faisant généralement aussi par soudage au laser.

Bien entendu les différents modes de réalisation mis en oeuvre ci-dessus ne présentent aucun caractère limitatif et d'autres détails et améliorations peuvent être apportés à l'invention, sans pour autant sortir du cadre de l'invention telle que revendiquée. Notamment en ce qui concerne le nombre de zones de liaison ainsi que le nombre d'ouvertures formées entre ces zones de liaison. De même pour chaque zone de liaison le type de soudure, que ce soit en angle, par transparence ou à clin, au laser ou par exemple par faisceau d'électrons, peut varier suivant des contraintes industrielles ou suivant des contraintes d'accessibilité propres à chaque zone de liaison.

## Revendications

1. Procédé d'assemblage d'un élément de liaison au sol (1) d'un véhicule, comportant une première parties (11) et une seconde partie (12) en forme de coques, assemblées entre elles en au moins une première (13a) et une deuxième (13b) zone de liaison de manière à former un corps creux rigide, la première zone de liaison (13a) étant constituée d'une surface de liaison (18a) prolongeant un premier bord de la première coque (11) et d'une surface de liaison (19a) prolongeant un premier bord de la seconde coque (12), ces deux surfaces de liaison (18a, 19a) de la première zone de liaison (13a) étant en appui l'une contre l'autre et prolongeant le premier bord de chacune des deux coques (11, 12) suivant une première direction (X), la deuxième zone de liaison (13b) étant constituée d'une surface de liaison (18b) prolongeant un deuxième bord de la première coque (11) et d'une surface de liaison (19b) prolongeant un deuxième bord de la seconde coque (12), ces deux surfaces de liaison (18a, 19a) de la deuxième zone de liaison (13b) étant en appui l'une contre l'autre et prolongeant le deuxième bord de chacune des deux coques (11, 12) suivant une seconde direction (Z), la première direction (X) et la seconde direction (Z) étant orientées de manière sensiblement perpendiculaire, le procédé d'assemblage comportant les étapes suivantes :
• une première étape consistant à positionner la surface de liaison (18a) de la première zone de liaison (13a) de la première coque (11) en appui contre la surface de liaison (19a) de la première zone de liaison (13a) de la seconde coque (12), et à positionner la surface de liaison (18b) de la deuxième zone de liaison (13b) de la première coque (11) en regard de la surface de liaison (19b) de la deuxième zone de liaison (13b) de la seconde coque (12) ;
• une deuxième étape consistant à faire coulisser la première coque (11) ou la seconde coque (12) suivant la première direction (X), positionnant en appui la surface de liaison (18b) de la deuxième zone de liaison (13b) de la première coque (11) contre la surface de liaison (19b) de la seconde zone de liaison (13b) de la seconde coque (12) ; et
• une troisième étape consistant à former des cordons de soudure (20) le long desdites zones de liaison (13),
le procédé d'assemblage étant **caractérisé en ce qu'**une étape intermédiaire de réglage de l'écartement de la première coque (11) par rapport à la seconde coque (12) est interposée entre la deuxième et la troisième étape, consistant à faire coulisser le bord de la première coque (11) ou la seconde coque (12) le long de la deuxième zone de liaison (13b) suivant la seconde direction (Z).

2. Procédé d'assemblage d'un élément de liaison au sol (1) selon la revendication 1, **caractérisé en ce qu'**une dernière étape est réalisée, consistant à solidariser dans des ouvertures (14) formées entre lesdites zones de liaison (13) des éléments de jonction ou de renfort (15).

3. Procédé d'assemblage d'un élément de liaison au sol (1) selon la revendication 1 ou 2, **caractérisé en ce qu'**une dernière étape consiste à solidariser un support pour un roulement à billes (17) dans des ouvertures (16) positionnées en regard l'une de l'autre, dans une zone sensiblement centrale de chacune des deux coques (11, 12).

4. Procédé d'assemblage d'un élément de liaison au sol (1) selon l'une quelconque des revendications précédentes, **caractérisé en ce que** la première coque (11) et/ou la seconde coque (12) sont réalisées en tôle mise en forme par emboutissage.

5. Procédé d'assemblage d'un élément de liaison au sol (1) selon l'une quelconque des revendications précédentes, **caractérisé en ce que** d'autres zones de liaison (13c, 13d) sont formées le long de la surface périphérique de chacune des deux coques (11, 12).

6. Procédé d'assemblage d'un élément de liaison au sol (1) selon l'une quelconque des revendications précédentes, **caractérisé en ce que** ledit élément de liaison au sol (1) forme un pivot de roue destiné à servir de support et à guider une roue d'un véhicule.

## Patentansprüche

1. Verfahren zum Zusammenbauen eines Bodenkontaktierungselements (1) eines Fahrzeugs, das einen ersten Teil (11) und einen zweiten Teil (12) in Schalenform umfasst, die untereinander in mindestens einer ersten (13a) und einer zweiten (13b) Verbindungszone derart zusammengebaut sind, dass sie einen starren Hohlkörper bilden, wobei die erste Verbindungszone (13a) aus einer Verbindungsoberfläche (18a) besteht, die einen ersten Rand der ersten Schale (11) verlängert, und aus einer Verbindungsoberfläche (19a), die einen ersten Rand der zweiten Schale (12) verlängert, wobei diese zwei Verbindungsoberflächen (18a, 19a) der ersten Verbindungszone (13a) gegeneinander aufliegen und den ersten Rand jeder der zwei Schalen (11, 12) entlang einer ersten Richtung (X) verlängern, wobei die zweite Verbindungszone (13b) aus einer Verbindungsoberfläche (18b) besteht, die einen zweiten Rand der ersten Schale (11) verlängert, und aus einer Verbindungsoberfläche (19b) die einen zweiten Rand der zweiten Schale (12) verlängert, wobei diese zwei Verbindungsoberflächen (18a, 19a) der zweiten Verbindungszone (13b) gegeneinander aufliegen und den zweiten Rand jeder der Schalen (11, 12) entlang einer zweiten Richtung (Z) verlängern, wobei die erste Richtung (X) und die zweite Richtung (Z) im Wesentlichen senkrecht ausgerichtet sind, wobei das Zusammenbauverfahren die folgenden Schritte umfasst:
• einen ersten Schritt, der darin besteht, die Verbindungsoberfläche (18a) der ersten Verbindungszone (13a) der ersten Schale (11) in Auflage gegen die Verbindungsoberfläche (19a) der ersten Verbindungszone (13a) der zweiten Schale (12) zu positionieren und die Verbindungsoberfläche (18b) der zweiten Verbindungszone (13b) der ersten Schale (11) gegenüber der Verbindungsoberfläche (19b) der zweiten Verbindungszone (13b) der zweiten Schale (12) zu positionieren,
• einen zweiten Schritt, der darin besteht, die erste Schale (11) oder die zweite Schale (12) entlang der ersten Richtung (X) gleiten zu lassen indem die Verbindungsoberfläche (18b) der zweiten Verbindungszone (13b) der ersten Schale (11) in Auflage gegen die Verbindungsoberfläche (19b) der zweiten Verbindungszone (13b) der zweiten Schale (12) positioniert wird, und
• einen dritten Schritt, der darin besteht, Schweißnähte (20) entlang der Verbindungszone (13) zu bilden,
Zusammenbauverfahren **dadurch gekennzeichnet, dass** ein Zwischenschritt des Einstellens des Abstands der ersten Schale (11) in Bezug auf die zweite Schale (12) zwischen dem zweiten und dem dritten Schritt eingefügt ist, der darin besteht, den Rand der ersten Schale (11) oder der zweiten Schale (12) entlang der zweiten Verbindungszone (13b) entlang der zweiten Richtung (Z) gleiten zu lassen.

2. Zusammenbauverfahren eines Bodenkontaktierungselements (1) nach Anspruch 1, **dadurch gekennzeichnet, dass** ein letzter Schritt ausgeführt wird, der darin besteht, in Öffnungen (14), die zwischen den Verbindungszonen (13) ausgebildet sind, Verbindungselemente oder Verstärkungselemente (15) fest zu verbinden.

3. Zusammenbauverfahren eines Bodenkontaktierungselements (1) nach Anspruch 1 oder 2, **dadurch gekennzeichnet, dass** ein letzter Schritt darin besteht, einen Träger für ein Kugellager (17) in Öffnungen (16), die einander gegenüber positioniert sind, in einer im Wesentlichen zentralen Zone jeder der zwei Schalen (11, 12) bis zu verbinden.

4. Zusammenbauverfahren eines Bodenkontaktierungselements (1) nach einem der vorhergehenden Ansprüche, **dadurch gekennzeichnet, dass** die erste Schale (11) und/oder die zweite Schale (12) aus durch Stanzen geformtem Blech hergestellt sind.

5. Zusammenbauverfahren eines Bodenkontaktierungselements (1) nach einem der vorhergehenden Ansprüche, **dadurch gekennzeichnet, dass** andere Verbindungszonen (13c, 13d) entlang der umfängliche Oberfläche jeder der zwei Schalen (11, 12 ausgebildet sind.

6. Zusammenbauverfahren eines Bodenkontaktierungselements (1) nach einem der vorhergehenden Ansprüche, **dadurch gekennzeichnet, dass** das Bodenkontaktierungselement (1) einen Radzapfen bildet, der dazu bestimmt ist, ein Rad eines Fahrzeugs zu tragen und zu führen.

## Claims

1. A method of assembling a ground-contacting element (1) of a vehicle, comprising a first (11) and a second (12) part in the form of shells, assembled together at at least a first (13a) and a second (13b) connection zone so as to form a rigid hollow body, the first connection zone (13a) being constituted by a connection surface (18a) extending a first edge of the first shell (11) and of a connection surface (19a) extending a first edge of the second shell (12), these two connection surfaces (18a, 19a) of the first connection zone (13a) resting against one another and extending the first edge of each of the two shells (11, 12) along a first direction (X), the second connection zone (13b) being constituted by a connection surface (18b) extending a second edge of the first shell (11) and by a connection surface (19b) extending a second edge of the second shell (12), these two connection surfaces (18a, 19a) of the second connection zone (13b) resting against one another and extending the second edge of each of the two shells (11, 12) along a second direction (Z), the first direction (X) and the second direction (Z) being oriented in a substantially perpendicular manner, the assembly method comprising the following steps:
• a first step consisting in positioning the connection surface (18a) of the first connection zone (13a) of the first shell (11) resting against the connection surface (19a) of the first connection zone (13a) of the second shell (12), and positioning the connection surface (18b) of the second connection zone (13b) of the first shell (11) facing the connection surface (19b) of the second connection zone (13b) of the second shell (12);
• a second step consisting in sliding the first shell (11) or the second shell (12) along the first direction (X), positioning the connection surface (18b) of the second connection zone (13b) of the first shell (11) to rest against the connection surface (19b) of the second connection zone (13b) of the second shell (12); and
• a third step consisting in forming weld beads (20) along the said connection zones (13),
the method of assembling being **characterized in that** an intermediate step of adjusting the spacing of the first shell (11) with respect to the second shell (12) is interposed between the second and the third step, consisting in sliding the edge of the first shell (11) or the second shell (12) along the second connection zone (13b) along the second direction (Z).

2. The method of assembling a ground-contacting element (1) according to claim 1, **characterized in that** a final step is realized, consisting in securing joining or reinforcing elements (15) in openings (14) formed between the said connection zones (13).

3. The method of assembling a ground-contacting element (1) according to claim 1 or 2, **characterized in that** a final step consists in securing a support for a ball bearing (17) in openings (16) positioned facing one another, in a substantially central zone of each of the two shells (11, 12).

4. The method of assembling a ground-contacting element (1) according to any one of the preceding claims, **characterized in that** the first shell (11) and/or the second shell (12) are made from sheet metal, shaped by stamping.

5. The method of assembling a ground-contacting element (1) according to any one of the preceding claims, **characterized in that** other connection zones (13c, 13d) are formed along the peripheral surface of each of the two shells (11, 12).

6. The method of assembling a ground-contacting element (1) according to any one of the preceding claims, **characterized in that** the said ground-contacting element (1) forms a wheel pivot intended to serve as a support and to guide a vehicle wheel.
